(19) Europäisches Patentamt
European Patent Office
Office européen des brevets

(11) EP 3 707 204 B1

(12) EUROPEAN PATENT SPECIFICATION

(45) Date of publication and mention of the grant of the patent:
**11.08.2021 Bulletin 2021/32**

(51) Int Cl.:
*C08L 23/08* (2006.01)  *C08L 23/04* (2006.01)
*B32B 27/32* (2006.01)  *B32B 5/18* (2006.01)
*B32B 5/32* (2006.01)  *B32B 27/06* (2006.01)
*B32B 27/18* (2006.01)

(21) Application number: **18800885.8**

(22) Date of filing: **06.11.2018**

(86) International application number:
**PCT/EP2018/080341**

(87) International publication number:
**WO 2019/086710 (09.05.2019 Gazette 2019/19)**

(54) **FOAMED POLYETHYLENE ARTICLE**

GESCHÄUMTER POLYETHYLENGEGENSTAND

ARTICLE EN POLYÉTHYLÈNE EXPANSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.11.2017 CN 201711075690**

(43) Date of publication of application:
**16.09.2020 Bulletin 2020/38**

(73) Proprietors:
• **Abu Dhabi Polymers Company Limited (Borouge) L.L.C.**
**Abu Dhabi (AE)**
• **Borealis AG**
**1220 Vienna (AT)**

(72) Inventors:
• **VAN HOUCKE, Daniel**
**P.O Box 6925**
**Abu Dhabi (AE)**
• **ANTONY, Nisha**
**P.O. Box 6925**
**Abu Dhabi (AE)**
• **SINGH, Raghvendra**
**P.O.Box 6925**
**Abu Dhabi (AE)**
• **SIONG, Chee**
**Singapore 049145 (SG)**
• **MALMROS, Peter**
**Singapore 049145 (SG)**
• **TIONG KHOON, Ong**
**Singapore 049145 (SG)**
• **DUAN, Xinrong**
**Pudong District**
**Shanghai 201203 (CN)**
• **ZHOU, Xin**
**Pudong District**
**Shanghai 201203 (CN)**

(74) Representative: **Dehns**
**St. Bride's House**
**10 Salisbury Square**
**London EC4Y 8JD (GB)**

(56) References cited:
**WO-A1-2005/007729   WO-A1-2014/202605**
**US-A- 4 738 810**

**Description**

This invention relates to a foamed polyethylene article, such as a foamed film or sheet. In particular, the invention relates to the use of a broad molecular weight distribution multimodal linear low density polyethylene (LLDPE) in combination with a low density polyethylene (LDPE) to prepare a foamed article, such as a foamed film or sheet or a foamed layer of a film of sheet. This combination of polymers leads to a foamed article with desirable properties.

**Background**

Foaming is a known technology which was firstly implemented in moulding where the thickness of the objects is sufficiently high to allow foaming to occur. Foaming is an interesting alternative for the polymer manufacturer as foamed articles can enable a cost reduction, weight reduction, insulation improvement, shorter injection cycles and other advantages.

Polyethylene foam can be prepared by extruding a molten polyethylene together with a foaming agent. The foaming agent can be either a gas or a product that will decompose at a given temperature and release a gas. At a high enough temperature and under pressure, the foaming agent will dissolve in the melted polymer and disperse. At the exit of the die, when the pressure drops, the incompatibility of the gas in the polymer will create bubbles that are called cells. As the polymer cools down to its solid phase, the growth of the cells is limited.

During foaming, cells originate and grow to a size determined by the equilibrium of pressure of the propellant versus the containing melt strength of the polymer, thus forming a cellular polymeric structure.

Foaming has also been used in the manufacture polyolefin films. This allows a reduction in the density of the film and therefore allows the use of less plastic for a given packaging solution. Foaming is, however, more challenging in the context of film preparation than moulding as there is no mould to contain the extruded melt and assure a smooth surface. The use of a mould helps keep a smooth article surface despite the presence of bubbles in the polymer.

In film and sheet applications, foaming has faced many difficulties linked to the rough surface that is formed. This is often called an "orange peel" effect. This is a particular problem in packaging solutions where the film needs to be printed as it leads to unclear pictures or text.

A further issue with foamed films and sheets is that smaller thicknesses compared to moulding leads to a serious drop in mechanical properties. Processability is also challenging. Conventional foamed films often do not have sufficiently good appearance and mechanical properties to find their place on the market.

Regarding the foaming itself, the dispersion of the cells and the size of the cells are important to limit the above mentioned drawbacks. A uniform distribution of cells and a low size per cell may reduce orange peel effect and minimise the reduction in the mechanical properties. Control of these parameters will depend on several characteristics including the polymer(s) containing the foaming agent, the foaming agent itself and the processing conditions.

To date, many foamed polyethylene products have failed to provide the minimum requirements for the packaging market.

In order for a foaming process to lead to valuable articles such as films and sheets, the polymer bubbles that are formed during the foaming process need to be stretchable yet limited in size. It will be clear therefore that a polymer with excellent melt strength is required to allow the formation of stretchable bubbles that can adopt an even size distribution.

WO2014202605A1 relates to a foamed film comprising polyethylene foam. The multi-layered foamed film comprises a foamed core layer which comprises a blend of LLDPE and LDPE. These foamed films exhibit a surface structure with a low surface roughness.

WO2005007729A1 relates to thin foamed polyethylene sheets. The particular blends of LLDPE and LDPE together with specific fabrication conditions used in WO2005007729A1 provide foamed sheets of thin gauge with good MD (machine direction) tear properties.

US4738810 relates to films prepared from LLDPE and optionally LDPE. These films are prepared using a chemical crosslinking agent and have lower densities than foams prepared from low density polyethylene only.

**Summary of Invention**

The present inventors have now found that the combination of a broad molecular weight distribution multimodal linear low density polyethylene (LLDPE) with a low density polyethylene (LDPE) can provide an ideal composition for foaming.

The multimodal LLDPE/LDPE composition provides melt strength and stretchability so that the composition can be foamed without breaks to form a foamed film or sheet. The composition allows the formation of cells with even structure and the foamed articles, such as the foamed sheets and films of the invention have sufficient mechanical properties for the foamed packaging market. Moreover, the processability of the polymer composition of the invention is excellent during the foaming process.

Without wishing to be limited by theory, it is believed that blending the broad molecular weight multimodal LLDPE with LDPE has a synergetic effect on the cell structure and the quality of the foaming. Whilst the examples concentrate on the use of chemical foaming agents it is envisaged that the results will extend to other foaming technologies such as physical foaming (with gaseous foaming agents).

Thus viewed from one aspect the invention provides a polymer composition comprising 35 to 89.9 wt% of a multimodal linear low density polyethylene (LLDPE) having an $MFR_{21/}MFR_2$ of 50 to 200 and/or a Mw/Mn of at least 10, 10 to 50 wt% of a low density polyethylene (LDPE); and 0.1 to 15.0 wt% of foaming agent component, based on the total amount (100wt%) of the polymer composition.

The invention also provides a polymer composition comprising:

(I) a first composition comprising 35 to 90 wt% of a multimodal linear low density polyethylene having $MFR_{21/}MFR_2$ of 50 to 200 and/or an Mw/Mn of at least 10; and 10 to 50 wt% of an LDPE, based on the total amount (100wt%) of the polymer composition; and

(II) 0.1 to 15.0 wt% of a foaming agent component based on the weight of the first composition.

In a preferred embodiment of the invention, the polymers of the polymer composition are selected from said multimodal LLDPE and LDPE. I.e. it is preferred that multimodal LLDPE and LDPE are the sole polymeric components present in the polymer composition.

Optionally, and preferably, the polymer composition may comprise additives, typically conventional additives, used in conventional amounts. Additives may form 0 to 10 wt% of the polymer composition, such as 0 to 5 wt%, preferably 0.01 to 5wt%. Some of optional additives may be in form of well-known masterbatches and may be carried on a polymeric carrier. Any polymer carrier is excluded from the above definition polymeric components, but forms part of the additive package.

Viewed from another aspect the invention provides a foamed article. In particular, the invention provides a foamed article comprising, such as consisting of, a polymer composition comprising 35 to 90 wt% of a multimodal linear low density polyethylene having an $MFR_{21/}MFR_2$ of 50 to 200 and/or a Mw/Mn of at least 10, 10 to 50 wt% of an LDPE and 0 to 10 wt% of optional additives based on the total amount (100wt%) of the polymer composition.

Viewed from another aspect the invention provides a foamed layer element comprising 35 to 90 wt% of a multimodal linear low density polyethylene having an $MFR_{21/}MFR_2$ of 50 to 200 and/or a Mw/Mn of at least 10 and 10 to 50 wt% of a low density polyethylene (LDPE). Optional additives may also be present in an amount of 0 to 10 wt%, as defined above.

The foamed layer element can be a foamed monolayer film or sheet or one or more foamed layer(s) of a multilayer film or a multilayer sheet.

Viewed from another aspect the invention provides a monolayer foamed film or sheet comprising 35 to 90 wt% of a multimodal linear low density polyethylene having an $MFR_{21/}MFR_2$ of 50 to 200 and/or an Mw/Mn of at least 10 and 10 to 50 wt% of an LDPE. Optional additives may also be present in an amount of 0 to 10 wt%, as defined above.

Viewed from another aspect the invention provides multilayer film or sheet wherein at least one layer of said film or sheet is foamed and wherein the foamed layer comprises 35 to 90 wt% of a multimodal linear low density polyethylene having an $MFR_{21/}MFR_2$ of 50 to 200 and/or an Mw/Mn of at least 10 and 10 to 50 wt% of an LDPE. Optional additives may also be present in an amount of 0 to 10 wt%, as defined above.

As already mentioned above, any polymer composition, article, element, film or sheet of the invention may comprise conventional polymer additives in addition to the foaming agent component. Optionally, the foaming agent component and some or all of those additives may be carried on a support medium (i.e. a carrier) which can be a polymer as well known in the art. Any optional carrier polymers of such additives are not to be included in the calculation of the wt% amount of the multimodal LLDPE or LDPE but are regarded as part of the additive package present.

Alternatively viewed the invention provides multilayer film or sheet wherein at least one layer of said film or sheet is foamed and wherein the foamed layer consists of a polymer composition comprising 35 to 90 wt% of a multimodal linear low density polyethylene having an $MFR_{21/}MFR_2$ of 50 to 200 and/or an Mw/Mn of at least 10 and 10 to 50 wt% of an LDPE based on the total amount (100wt%) of the polymer composition.

In an alternative embodiment, the invention provides a monolayer foamed film or sheet consisting of a composition comprising 35 to 90 wt% of a multimodal linear low density polyethylene having an $MFR_{21/}MFR_2$ of 50 to 200 and/or an Mw/Mn of at least 10 and 10 to 50 wt% of an LDPE based on the total amount (100wt%) of the polymer composition.

Viewed from another aspect the invention provides a process for manufacturing a foamed article comprising:

providing a first composition comprising 35 to 90 wt% of a multimodal linear low density polyethylene having an $MFR_{21/}MFR_2$ of 50 to 200 and/or an Mw/Mn of at least 10 and 10 to 50 wt% of an LDPE based on the total amount (100wt%) of the first polymer composition.;

adding to said first composition 0.1 to 15 wt% of a foaming agent component based on the weight of the first composition to form a second composition;

processing the second composition by passing the second composition through an extruder and a die to form a foamed article.

Viewed from another aspect the invention provides a process for manufacturing a foamed layer element comprising:

providing a first composition comprising 35 to 90 wt% of a multimodal linear low density polyethylene having an $MFR_{21}/MFR_2$ of 50 to 200 and/or an Mw/Mn of at least 10 and 10 to 50 wt% of an LDPE;

adding to said first composition 0.1 to 15 wt% of a foaming agent component based on the weight of the first composition to form a second composition;

processing the second composition by passing the second composition through an extruder and a die to form a foamed layer element.

Viewed from another aspect the invention provides a process for manufacturing a foamed film or sheet comprising:

providing a first composition comprising 35 to 90 wt% of a multimodal linear low density polyethylene having an $MFR_{21}/MFR_2$ of 50 to 200 and/or an Mw/Mn of at least 10 and 10 to 50 wt% of an LDPE;

adding to said first composition 0.1 to 15 wt% of a foaming agent component based on the weight of the first composition to form a second composition;

processing the second composition by passing the second composition through an extruder and a die to form a foamed sheet or film.

### Detailed Description of Invention

The present invention relates to the formation of a foamed article, preferably a foamed film or sheet comprising a foamed blend of multimodal LLDPE and LDPE. Films of the invention are preferably blown films, manufactured using conventional film blowing techniques.

A foamed layer of a foamed article is produced in the presence of a foaming agent in order to introduce gas into the extruded polymer melt and hence cells into the final foamed article. Foamed articles will have a lower density than the corresponding unfoamed article. The reduction in density is ideally at least 50 kg/m³, such as at least 100 kg/m³.

Whilst the invention will be primarily described in relation to films, it will be appreciated that the preferred embodiments below also apply to the sheet aspects of the invention or articles in general.

### Multimodal LLDPE

The articles or polymer composition of the invention comprise a multimodal LLDPE. The term "multimodal" means, if otherwise not specified, multimodality with respect to molecular weight distribution and includes bimodal polymers.

Usually, a polyethylene comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal LLDPE, there is by definition a lower molecular weight component (LMW) and a higher molecular weight component (HMW). The LMW component has a lower molecular weight than the higher molecular weight. Typically the difference is at least 5000 g/mol. However, the difference in Mw is more easily observed through an analysis of the MFR of the components.

In a multimodal LLDPE of use in this invention at least one of the LMW and HMW components is a copolymer of ethylene. Preferably, at least HMW component is an ethylene copolymer. It is also possible for the lower molecular weight (LMW) component to be an ethylene copolymer. Alternatively, if one of the components is a homopolymer, then LMW is the preferably the homopolymer. The combination of a LMW homopolymer and HMW ethylene copolymer is especially preferred.

The multimodal LLDPE may comprise up to 5.0 % by weight of a well-known polyethylene prepolymer (obtainable from a prepolymerisation step as well known in the art). In case of such prepolymer, the prepolymer component is comprised in one of LMW and HMW components, preferably LMW component, as defined above.

The term "ethylene copolymer" is used in this context to encompass polymers comprising repeat units deriving from ethylene and at least one other $C_{3-12}$ alpha olefin monomer. Ethylene obviously forms the major monomer unit present. Preferred copolymers are binary and comprise a single comonomer or are terpolymers and comprise two or three comonomers. Preferably, one comonomer is present in the multimodal LLDPE of the invention.

The multimodal LLDPE may have a density of 905 to 940 $kg/m^3$, e.g. 915-935 $kg/m^3$.

The melt flow rate, $MFR_2$ of the multimodal LLDPE is preferably in the range 0.01 to 20 g/10min, e.g. 0.05 to 10 g/10min, preferably 0.1 to 6.0 g/lOmin.

The $MFR_{21}$ of the multimodal LLDPE may be in the range 5 to 500, preferably 10 to 200 g/lOmin. The Mw of the multimodal LLDPE may be in the range 100,000 to 300,000, preferably 150,000 to 270,000.

It is an important feature that the multimodal LLDPE of the invention has a broad molecular weight distribution. This may be shown by the high $MFR_{21}/MFR_2$ value or a high Mw/Mn.

The $MFR_{21}/MFR_2$ of the multimodal LLDPE is preferably 50 to 200, such as 60 to 150, especially 70 to 120. This high value reflects the breadth of the molecular weight distribution.

The Mw/Mn of the multimodal LLDPE is preferably 10 or more, such as 10 to 50, especially the Mw/Mn of the LLDPE may be in the range 10 to 30, preferably 10 to 25. It is envisaged that the use of a broad molecular weight distribution multimodal LLDPE provides additional melt strength and stretchability during the foaming process so that a foamed article such as a foamed film or sheet can be formed with a well dispersed cell structure of limited cell size and containing mainly closed cells. The combination of the broad Mw/Mn multimodal LLDPE and the LDPE has a syngeristic effect which leads to improved cell structure after foaming, e.g. even cell structure.

In the foamed layer of the invention the length of the cells are preferably 200 to 1500 microns, preferably 200 to 1000 microns. The ratio length/width of the cells can fluctuate between 1 and 10, and can be partially adjusted by the processing parameters like speed and blow up ratio. Preferred ratios of length/width would be between 1.5 and 5.

The thickness of the cells will not exceed the thickness of the foamed layer and will be generally lower than the 2 other dimensions. The 3 dimensions of the cells will, in average, mainly depend on the composition of the foamed layer, including the selected foaming agent itself, and the processing conditions.

The multimodal LLDPE may be formed from ethylene along with at least one $C_{3-12}$ alpha-olefin comonomer, e.g. 1-butene, 1-hexene or 1-octene. Preferably, the multimodal LLDPE is a binary copolymer, i.e. the polymer contains ethylene and one comonomer, or a terpolymer, i.e. the polymer contains ethylene and two or three comonomers. Preferably, the multimodal LLDPE comprises an ethylene hexene copolymer, ethylene octene copolymer or ethylene butene copolymer, especially an ethylene butene copolymer. The amount of comonomer present in the multimodal LLDPE is preferably 0.5 to 12 mol%, e.g. 2 to 10% mole, especially 4 to 8% mole.

Alternatively, comonomer contents present in the multimodal LLDPE may be 1.5 to 10 wt%, especially 2 to 8 wt%. The comonomer content can be determined by quantitative 13C nuclear magnetic resonance (NMR) spectroscopy after basic assignment (J. Randall JMS - Rev. Macromol. Chem. Phys., C29(2&3), 201-317 (1989).

As stated above a multimodal LLDPE comprises at least a LMW component and a HMW component.

The LMW component of the multimodal LLDPE preferably has a $MFR_2$ of at least 50, preferably 50 to 3000 g/10 min, more preferably 100 to 500 g/10 min. The molecular weight of the low molecular weight component should preferably range from 20,000 to 50,000, e.g. 25,000 to 40,000.

The density of the lower molecular weight component may range from 930 to 980 $kg/m^3$, e.g. 940 to 970 $kg/m^3$. more preferably 945 to 955 $kg/m^3$ in the case of copolymer and 940 to 975 $kg/m^3$, especially 960 to 972 $kg/m^3$ in the case of homopolymer.

The lower molecular weight component preferably forms 30 to 70 wt%, e.g. 40 to 60% by weight of the multimodal LLDPE with the higher molecular weight component forming 70 to 30 wt%, e.g. 40 to 60% by weight.

The higher molecular weight component has a lower $MFR_2$ and a lower density than the lower molecular weight component.

The higher molecular weight component has preferably an $MFR_2$ of less than 1.0 g/10 min, preferably less than 0.5 g/10 min, especially less than 0.2 g/lOmin. I may have a density of less than 915 $kg/m^3$, e.g. less than 910 $kg/m^3$, preferably less than 905 $kg/m^3$. The Mw of the higher molecular weight component may range from 100,000 to 1,000,000, preferably 250,000 to 500,000.

In any copolymeric HMW component, at least 0.25 mol-%, preferably at least 0.5 mol-%, e.g. at least 1-mol%, such as up to 10 mol-%, of repeat units derive from the comonomer. This value may be measured or calculated. Ethylene forms the majority of the HMW component.

It is preferred if the multimodal LLDPE of the invention is one manufactured using a Ziegler Natta catalyst. Multimodal LLDPEs of use in the foamed articles, preferably films/sheets of the invention are not new and can be purchased from polyolefin suppliers such Borouge, Borealis, Exxon, Basell, Dow etc.

**LDPE**

The article, preferably film/sheet of the invention also comprises a low density polyethylene. The term low density polyethylene is a term of this art and defines a polyethylene polymer prepared in a high pressure process using typically a radical initiatior(s), like peroxide(s), as is well known in the art. LDPE polymers and LLDPE polymers are not the same as is well known to the person skilled in this art.

The LDPE of use in the invention can be an LDPE copolymer or an LDPE homopolymer. Preferably, it is an LDPE homopolymer.

The LDPE preferably has a $MFR_2$ in the range 0.1-20 g/10 min, more preferably 0.3-10 g/10 min, still more preferably 0.5-5.0 g/10 min. The density of the LDPE is preferably 905-940 kg/m$^3$, more preferably 910 to 937 kg/m$^3$, e.g. 915 to 935 kg/m$^3$.

LDPEs of use in the invention are not new and can be purchased from polyolefin suppliers such as Borouge, Borealis, Exxon, Basell, Dow etc.

In the foamed article, foamed layer element of the invention, such as in any foamed film or sheet layer of the invention, or in the polymer composition of the invention there may be at least 10 wt%, such as 10 to 50 wt%, preferably 15 to 45 wt%, especially 18 to 42 wt% of the LDPE. In one embodiment there may be 10 to 49.9 wt%, preferably 15 to 44.9 wt%, especially 18 to 41.9 wt% of the LDPE, of the LDPE in the polymer composition of the invention. In one embodiment, the polymer composition comprises 25 to 49.9 wt%.

In the foamed article, such as foamed layer element of the invention, such as in any foamed film or sheet layer of the invention, there may be at least 35 wt%, such as 35 to 90 wt%, preferably 40 to 90 wt%, such as 45 to 90 wt%, preferably 50 to 90 wt% of the multimodal LLDPE. In more preferred options there is 55 to 85 wt%, especially 58 to 72 wt% of the multimodal LLDPE. In one embodiment there may be 50 to 75 wt% of the multimodal LLDPE.

In the polymer composition of the invention, there may be at least 35 wt%, such as 35 to 89.9 wt%, preferably 40 to 89.9wt%, such as 45 to 89.9 wt%, preferably 50 to 89.9 wt% of the multimodal LLDPE. In more preferred options there is 55 to 85 wt%, especially 58 to 72 wt% of the multimodal LLDPE. In one embodiment there may be 50 to 75 wt% of the multimodal LLDPE.

Note that the foamed article or the polymer composition can include other components such as additives, decomposition products etc.

**Preparation of polymer**

The multimodal LLDPE can be a commercially available product or produced in a known manner according to or analogously to conventional polymerisation processes described in the literature of polymer chemistry.

Multimodal (e.g. bimodal) polymers can be made by mechanical blending two or more, separately prepared polymer components or, preferably, by *in-situ* blending in a multistage polymerisation process during the preparation process of the polymer components. Both mechanical and in-situ blending is well known in the field.

Accordingly, preferred multimodal LLDPE polymers, are prepared by in-situ blending in a multistage, i.e. two or more stage, polymerization or by the use of two or more different polymerization catalysts, including multi- or dual site catalysts, in a one stage polymerization.

Preferably the multimodal LLDPE is produced in at least two-stage polymerization using the same catalyst, e.g. a Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal LLDPE is preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, $MFR_2$ etc of the higher molecular weight component using Kim McAuley's equations. Thus, both density and $MFR_2$ can be found using K. K. McAuley and J. F. McGregor: On-line Inference of Polymer Properties in an Industrial Polyethylene Reactor, AIChE Journal, June 1991, Vol. 37, No, 6, pages 825-835.

The multimodal LLDPE may be made using any conventional catalyst, such as a chromium, single site catalysts, including metallocenes and non-metallocenes as well known in the field. Preferably, a Ziegler-Natta catalyst is used.

Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

Conventional cocatalysts, supports/carriers, electron donors etc can be used.

A LDPE may be prepared according to any conventional high pressure polymerisations (HP) process in a tubular or autoclave reactor using a free radical formation. Such HP processes are very well known in the field of polymer chemistry and described in the literature.

**Foaming Agent Component**

In order to prepare a foamed article such as a foamed film or sheet or a foamed layer within a film or sheet, a foaming agent component is required. The foaming agent can be a gas or a chemical that releases a gas during the extrusion process.

The advantages of the proposed composition apply for all foaming technologies like, for example:

1) Physical foaming that converts the pellets into foamed films or sheets using a gas;

2) Chemical foaming that converts the pellets into foamed film or sheet using a chemical that will release a gas.

In one embodiment therefore the foaming agent is simply a gas, typically an inert gas, that is added into the composition before extrusion. The foaming agent (or blowing agent) is preferably chemical and in solid or liquid form, preferably solid form. It is added to the polymer composition prior to the extrusion process. It will be appreciated that such a foaming agent decomposes to release gas that will dissolve inside the melted polymer and expand at the exit of the die, when the pressure drops. In the final foamed article therefore, the foaming agent is no longer present (other than potential degradation products, carrier etc). However, before the foamed article, such as film or sheet is produced, a polymer composition exists which comprises multimodal LLDPE, LDPE and the foaming agent component and this forms a further aspect of the invention.

Viewed from another aspect the invention provides a polymer composition comprising 35 to 89.9 wt% of a multimodal linear low density polyethylene having an $MFR_{21}/MFR_2$ of 50 to 200 and/or an Mw/Mn of at least 10, 10 to 50 wt% of an LDPE and 0.1 to 15 wt% of foaming agent component. Optional additives may also be present in an amount of 0 to 10 wt% as defined above.

The preferred percentages of LLDPE and LDPE and foaming agent component content also apply to this embodiment of the invention. Thus preferred amounts of the multimodal LLDPE are 35 to 89.9 wt%, preferably 40 to 89.9 wt%, 45 to 89.9 wt%, preferably 50 to 89.9 wt%.

The term foaming agent component will be used herein to define the supplied form of the foaming agent including components on which the foaming agent itself may be carried. In particular, the foaming agent component may be in the form of a masterbatch and may be carried on a carrier, such as a polymeric carrier. As previously noted, if the carrier is a polymer then the polymer carrier is not counted towards the weight percentage of polymers in the polymer composition (LLDPE/LDPE) but is deemed part of the foaming agent component. Moreover, the foaming agent itself could form 100% of the foaming agent component but typically, it may form 10 to 70 wt%, such as 15 to 50 wt% of the foaming agent component. The foaming agent component is typically purchased from suppliers. The datasheet will normally indicate the actual foaming agent content within the foaming agent component.

Appropriate chemical foaming agents can be any known organic or inorganic compounds that decompose at elevated temperatures releasing gases such as air, nitrogen, carbon dioxide, carbon monoxide or other hydrocarbons. Suitable organic foaming agents that may be utilized in this invention include sulfonylhydrazide, 5-phenyltetrazole, azodicarbonamide, citric acid and modified azodicarbonamide, e.g. azodicarbonamide modified with zinc oxide, calcium carbonate or the like as known in the art.

Suitable inorganic foaming agents include sodium borohydride, ammonium carbonate, sodium bicarbonate, and modified sodium bicarbonate, i.e., sodium bicarbonate modified with a proton donor such as citric acid. Further options as foaming agents of particular interest are azodicarbonamides and sodium bicarbonate foaming agents such as modified azodicarbonamide and modified sodium bicarbonate. Most preferred inorganic foaming agents include sodium borohydride, ammonium carbonate, sodium bicarbonate, and modified sodium bicarbonate, i.e. sodium bicarbonate modified with a proton donor such as citric acid. Where a product comprises a modifying agent, e.g. to encourage gas release during foaming, the modifying agent is considered a part of the foaming agent.

Considering the foaming agent component as supplied (i.e. including any carrier etc), amounts added may range from 0.2 to 15.0 wt% based on the weight of LLDPE/LDPE mixture, such as 0.5 to 10.0 wt%, especially 1.0 to 5.0 wt%, such as 1.0 to 3.0 wt%.

Alternatively viewed, the polymer composition may comprise 0.2 to 15.0 wt%, especially 0.5 to 10.0 wt%, such as 1.0 to 5.0 wt%, especially 1.0 to 3.0 wt% of the foaming agent component. The weight percentage of the LLDPE and/or LDPE component can be adjusted down to accommodate these percentages.

The decomposition products of the foaming agent that form the gaseous phase or gaseous cells of the foamed polyolefin include air, nitrogen, carbon dioxide, carbon monoxide and other hydrocarbons. Azodicarbonamides generate primarily nitrogen gas into the melt; modified bicarbonates generate primarily carbon dioxide gas into the melt. Ultimately, these gases expire after extrusion and are replaced by air within the film.

## Article, e.g. Films and sheets

The article of the invention is a foamed article and is preferably a foamed film or sheet. The foamed film or sheet of the invention may be monolayer or multilayer structure. It is preferred if films or sheets of the invention comprise one layer, such as 2 layers or at least 3 layers, such as 3 or 5 layers.

A particularly preferred multilayer film or sheet comprises at least three layers (e.g. 3 layers) in the following order:

(i) layer (A),
(ii) layer (B) and
(iii) layer (C).

It is preferred if layers A and C are outer layers. Layer B is a core layer. The polymer composition of layer (A) and the polymer composition of layer (C) can be same or different. The inner layer (C) is typically designed as a sealing layer and to have good slip properties. The outer layer (A) is often used for lamination. The (B) layer preferably comprises the foamed layer of the invention.

The foamed composition of the invention can be present in any layer of the film or sheet of the invention. It is preferred, however, that the foamed composition of the invention is present in the core layer (B) of the multilayer film or sheet. It is also possible however, for the foamed composition to be present in the (A) and/or (C) layer. This is not however preferred. It is preferred if layers (A) and (C) are not foamed whereas layer (B) is foamed.

Layers which do not comprise the foamed composition of the invention, e.g. the (A) or (C) layers may comprise any other polymers, in particular, other polyethylenes. Polyethylenes of use are preferably LLDPE and LDPEs.

It is preferred if layers (A) and/or (C) comprise a multimodal LLDPE. In particular, the multimodal LLDPE in layers (A) and/or (C) may be the same polymer used in the composition of the invention.

Alternatively, the (A) and/or (C) layers can comprise a composition of the invention but without foaming agent. (A) and/or (C) layers may therefore contain 35 to 90 wt% of a multimodal linear low density polyethylene having an $MFR_{21}/MFR_2$ of 50 to 200 or a Mw/Mn of at least 10 and 10 to 50 wt% of an LDPE. Conveniently, the layer composition used in layers (A) and/or (C) is the same as the composition used in the foamed layer.

Other options include an (A) layer comprising 35 to 90 wt% of a multimodal linear low density polyethylene having an $MFR_{21}/MFR_2$ of 50 to 200 or an Mw/Mn of at least 10 and 10 to 50 wt% of an LDPE and a (C) layer comprising, e.g. consisting of, a multimodal linear low density polyethylene (or vice versa).

Another option is an (A) and/or (C) layer comprising a blend of LLDPEs, e.g. a multimodal LLDPE and a unimodal LLDPE. In general, the polymers of the outer layers can be broadly selected in accordance with the final required properties, like mechanical, surface, sealing, lamination.

In a highly preferred embodiment, the layer (A) and/or layer (C) is a LLDPE especially a single site LLDPE (mLLDPE), i.e. an LLDPE prepared using a single site catalyst such as a metallocene. Such a mLLDPE may be multimodal or unimodal. Preferably, the mLLDPE may have an Mw/Mn of 2 to 10, such as 2 to 4.

In a multilayer film, one layer is foamed as defined herein. It is possible to foam some or all of the other layers however that is not preferred. Preferably, only one layer is foamed, i.e. the layer comprising the composition of the invention, especially the core layer. It is preferred therefore if other layers are not foamed. In a monolayer construction, it will be clear that the single layer must be foamed.

Any film layer may "consist of" the defined polyolefins, i.e. consists of the LDPE and the multimodal LLDPE. The term "consists of" used in relation to film layer materials is meant to exclude only the presence of other polyolefin components. Thus, said term does not exclude the presence of additives. Some of these additives may be masterbatches and hence carried on a polymeric carrier. Such masterbatches are not excluded.

Any film or sheet may contain standard additives such as antioxidants, UV stabilisers, acid scavengers, nucleating agents, anti-blocking agents, slip agents etc as well as polymer processing agent (PPA). In one embodiment, talc is absent in any foamed layer of the invention.

The films or sheets of the invention may incorporate one or more barrier layers as is known in the art. For certain applications for example, it may be necessary to incorporate a barrier layer, i.e. a layer which is impermeable to gas and moisture, into the film structure. This can be achieved using conventional lamination techniques or by coextrusion.

In films or sheets comprising, preferably consisting of, layers (A), (B) and (C), layer (A) preferably forms 10 to 35 % of the thickness of the film, layer (B) forms 30 to 80 % of the thickness of the film and layer (C) preferably forms 10 to 35 % of the thickness of the film. In such films the layers (A) and, if present, (C) may be of equal thickness. Thus the film thickness distribution (%) of a ABC layer is preferably 10-35%/30-80%/10-35% of the total film thickness (100%) after foaming.

The films/sheets of the invention exhibit remarkable properties.

In a film or sheet of the invention the final density of the monolayer film or sheet or the density of the foamed layer of the multilayer film or sheet is 600 to 800 kg/m$^3$.

Any film or sheet of the invention may have a thickness of 50 to 1000, for film preferably 50 to 200 $\mu$m. Any foamed layer within such a film or sheet may have a thickness of 50 to 500, for film preferably 50 to 200 $\mu$m.

The foamed layer of said film or sheet is preferably foamed by at least 10wt%, such as at least 12 wt%. Maximum foaming may be 30 wt%, such as 25 wt%. Foam percentage is determined by comparing the foamed density to the prefoamed density of the blend.

**Film/sheet preparation**

For film or sheet formation using polymer mixtures the different polymer components (e.g. within layers (A), (B) and optional (C)) are typically intimately mixed prior to extrusion and as is well known in the art. It is especially preferred to thoroughly blend the components, for example using a twin screw extruder, preferably a counter-rotating extruder prior to extrusion.

As to the first step of the preparation process, the layered structure of the film/sheet of the invention may be prepared by any conventional formation process including extrusion procedures. Monolayers films can be produced by extruding the same mixture in all 3 layers of the coextrusion. Films can be prepared by cast film or blown film processes.

The composition of the invention can be prepared by conventional mixing and the foaming agent component added. This can be passed to an extruder. The extruder melts the composition of the invention to the proper viscosity so that it can absorb the gas generated by the foaming agent. The extruder also intimately mixes all components and maintains the composition of the invention under sufficient pressure so that the gas produced by decomposition of the foaming agent remains in solution in the mixture until the mixture is extruded.

Although the gas released by the foaming agent will plasticize the melt, the general extrusion parameters of the foamed composition will not change relative to a standard non-foamed composition. Therefore, suitable pressures for the extrusion process range from about 30 bar to about 300 bar. Suitable temperatures for the extrusion process range from about 170° C. to about 230° C.

Particularly preferably the multilayer film of layers (A), (B) and (C) are formed by blown film extrusion, more preferably by blown film coextrusion processes. Typically, the compositions providing layers (A), (B) and (C) will be blown (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

Thus, the invention provides a method for manufacturing a foamed article comprising:

providing a composition comprising 35 to 89.9 wt% of a multimodal linear low density polyethylene having an MFR$_{21}$/MFR$_2$ of 50 to 200 or an Mw/Mn of at least 10 and 10 to 50 wt% of an LDPE and 0.1 to 15.0 wt% of a foaming agent component based on the weight of the composition;

processing the composition mixture by passing the composition mixture through an extruder and a die to form a foamed article, such as a film or sheet.

In one embodiment the sheet is a multilayer sheet and the invention comprises the coextrusion of the composition so as to form the core layer B of an ABC sheet.

The invention also provides a method of manufacturing a foamed film comprising:

providing a composition comprising 35 to 89.9 wt% of a multimodal linear low density polyethylene having an $MFR_{21}/MFR_2$ of 50 to 200 or an Mw/Mn of at least 10 and 10 to 50 wt% of an LDPE and 0.1 to 15.0 wt% of a foaming agent component based on the weight of the composition;

processing the composition mixture by passing the composition mixture through an extruder and a die to form a foamed article, such as a film or sheet.

In one embodiment the film is a multilayer film and the invention comprises the coextrusion of the composition so as to form the core layer B of an ABC film.

The films/sheets obtained by the processes of the invention can be used for packaging applications, such as sacks or bags in a known manner. Alternatively, the film may be further processed to tubular films which are either used directly in conventional vertical or horizontal form-fill-seal machines as well known in the art or are made into tubular films by conventional tube making machines and used thereafter in packaging. This may be carried out in-line during film production or off-line by conventional techniques. The tubular film can then be fed to a form, fill and seal (FFS) machine for use in packaging.

Film or sheets of the invention may be prepared from either flat die extrusion or blown film extrusion. Films prepared by flat die extrusion may be used for food packaging and stand up pouches. Flat die extruded sheets are ideal for thermoforming, e.g. trays. Films from circular dies may also be used in food packaging and stand up pouch applications. Sheets prepared from circular dies are ideal for membranes such as geomembranes, and roofing membranes

The invention will now be described with reference to the following non limiting examples and figures.

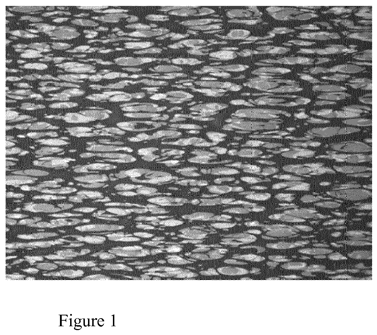

Figure 1 is a micrograph of sample IE2 of the examples.

**Determination Methods**

**Melt Flow Rate**

The melt flow rate (MFR) is determined according to ASTM D1238 and is indicated in g/10 min. The MFR is an indication of the melt viscosity of the polymer. The MFR is determined at 190°C for polyethylene. The load under which the melt flow rate is determined is usually indicated as a subscript, for instance $MFR_2$ is measured under 2.16 kg load, $MFR_5$ is measured under 5 kg load or $MFR_{21}$ is measured under 21.6 kg load. $MFR_{21/2}$ is the ratio of $MFR_{21}$ / $MFR_2$. This is also called $FRR_{21/2}$.

**Density**

Density of the polymer was measured according to ISO 1183-1:2004 Method A on compression moulded specimen prepared according to EN ISO 1872-2 (February 2007) and is given in $kg/m^3$.

The foamed percentage is obtained from the division of the density on foamed film by the density on un-foamed film.

*Foaming ratio(%): $(d_i-d_f))d_i$ x 100 (expresses weight density reduction) where $d_i$ is initial density and $d_f$ is foamed density.*

To determine foamed density, a piece of film is cut along the width of the reel. The film is folded in order to stack 12 layers of equal size.

A series of 12 disks is cut at once through the 12 layers, so that we have 12 different disks along the width of the film. Diameter of the disk is 24.9 mm.

Among the 12 disks, 4 best ones are selected, generally in the middle of the stack. Multiplying the diameter with the measured thickness of each disks provides the volume of each 4 disks.

Each disk is weighed and the volumic mass of each disk is the division of the weight (gr) by the volume (cm3).

Dividing the volumic mass of each disk by the volumic mass of water (1gr/cm3), we get the density of each disk.

The density of the sample is defined by the average of the densities of the 4 disks.

**Molecular weight**

$M_w$, $M_n$ and MWD are measured by Gel Permeation Chromatography (GPC) according to the following method: The weight average molecular weight $M_w$ and the molecular weight distribution (MWD = $M_w/M_n$ wherein $M_n$ is the number average molecular weight and $M_w$ is the weight average molecular weight) is measured according to ISO 16014-4:2003 and ASTM D 6474-99. A Waters GPCV2000 instrument, equipped with refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert-butyl-4-methyl-phenol) as solvent at 140 °C and at a constant flow rate of 1 mL/min. 209.5 μL of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants were used as given in ASTM D 6474-99. All samples were prepared by dissolving 0.5 - 4.0 mg of polymer in 4 mL (at 140 °C) of stabilized TCB (same as mobile phase) and keeping for max. 3 hours at a maximum temperature of 160 °C with continuous gentle shaking prior sampling in into the GPC instrument.

As it is known in the art, the weight average molecular weight of a polymer composition can be calculated if the molecular weights of its components are known according to:

$$Mw_b = \sum_i w_i \cdot Mw_i$$

where $Mw_b$ is the weight average molecular weight of the polymer composition,
$w_i$ is the weight fraction of component "i" in the polymer composition and
$Mw_i$ is the weight average molecular weight of the component "i".

The number average molecular weight can be calculated using the well-known mixing rule:

$$\frac{1}{Mn_b} = \sum_i \frac{w_i}{Mn_i}$$

where $Mn_b$ is the number average molecular weight of the polymer composition,
$w_i$ is the weight fraction of component "i" in the polymer composition and
$Mn_i$ is the number average molecular weight of the component "i".

**Examples**

The following materials are used in the examples:

A commercial multimodal butene LLDPE copolymer (grade FB2230 supplied by Borouge) of density 923 kg/m$^3$ and Melt Flow Rate $MFR_2$ of 0.25 g/10min, a $MFR_{21/2}$ of 88, with an Mw/Mn of 16 (polymer A).
A commercial LDPE polymer of density 923 kg/m$^3$ and $MFR_2$ of 2.0 g/10min (LDPE-1) (grade FT6230 supplied by Borealis AG).
Clariant Hydrocerol CT3232 as foaming agent (supplied by Clariant as a masterbatch with carrier LDPE): Active ingredient 20 wt% of the MB.
Elite 5401G, which is a commercial LLDPE copolymer of Dow produced using INSITE™ technology: density 918 kg/m$^3$ and $MFR_2$ of 1.0 g/lOmin.
Exceed 1018, which is a commercial LLDPE copolymer of Exxonmobil produced using metallocene catalyst: density 918 kg/m$^3$ and $MFR_2$ of 1.0 g/lOmin.

**Methods**

A 3 layer ABA film was prepared with layer distribution 25/50/25 (before foaming). Polymer A was used alone in both of the A layers. The B layer comprised polymer A and optionally LDPE-1 (inventive example) as explained in table 1. All parameters are kept the same to visualize the effect of CT3232 on the film.
Guangdong Jinming 3 Layer Co-extrusion Blown Film line:

Extruder: φ45mm / φ55mm / φ45mm
Screw: L/D: 30:1; Separation & Barrier type;
Die diameter: 180mm;

Die Gap: 1.8mm;
Machine Width: 800mm
Outer layer: Extruder A (°C): 190 to 210;
Core layer: Extruder B (°C): 170 to 210;
Inner layer: Extruder C (°C): 190 to 200.

**Multilayer film**

For IE1, a blend of 80wt% by weight of polymer A and 20% by weight of LDPE-1 was prepared to which was added 2.5 wt% by weight (relative to the weight of the polyolefins) of a foaming agent component CT3232 (and hence 0.4 wt% of foaming agent). The mixture was introduced into the extruder B. The melt including the dissolved gas was pulled from the die into the cooling tower by nip rollers. Concurrently, air was blown inside the film column to form a bubble. Other examples are prepared following the same protocol.

**Comparative Examples**

In order to show the importance of the blend of the invention, the invention was compared to a series of competitor grades and polymer A in the absence of LDPE. These are prepared using the same procedure as above.

Table 1

| Sample | B layer | CT3232 | Thickness | Appearance | Initial | Final | Foaming ratio |
|---|---|---|---|---|---|---|---|
|  |  | (%) | ($\mu$) |  | Density ($d_i$) | Density ($d_f$) | (%) |
| C0 | 100 wt% Pol A | 0 | 93 |  | 0.923 | 0.919 | 0% |
| C1 | 100 wt% Pol A | 1.5 | 95 |  | 0.923 | 0.870 | 6% |
| C2 | 100 wt% Pol A | 2.5 | 134 |  | 0.923 | 0.644 | 30% |
| IE1 | 80 wt% Pol A 20% LDPE-1 | 2.5 | 125 |  | 0.923 | 0.702 | 24% |
| IE2 | 60 wt% Pol A 40% LDPE-1 | 2.5 | 122 | Smooth | 0.923 | 0.708 | 23% |
| C3 | Exceed 1018 | 2.0 |  | Shark skin | 0.918 |  |  |
| C4 | Dow 5401GS | 2.0 |  | Shark skin | 0.918 |  |  |

IEland IE2 give better foaming (e.g. improved cell dispersion and cell size compared to C1/C2. Inventive examples also have better mechanical properties and are more processable.

IE2 shows the best cell dispersion and cell size together with good mechanical properties. Moreover, the invention enables avoidance of talc which is often needed in the state of art foam solutions. The blend is therefore easier to foam and it is easier to achieve a foam with good quality. Additionally, costs of foaming process can be reduced by avoiding talc.

A micrograph of sample IE2 is shown in figure 1. Sample IE2 shows even cell size and dispersion of cells. IE2 exhibits even foaming together with good mechanical properties and no shark skin. In contrast, visual inspection of the competitor films showed shark skin. This demonstrates the superiority of blend of the invention.

**Conclusions**

The use of broad molecular weight distribution multimodal LLDPE in combination with LDPE provides a synergetic solution for the foaming process. The cell structure is more isotropic. The processability was as good as non-foamed. There was no need to add any other specific additive like processing aid, nucleating agent etc. We were able to easily foam till 15% or more without any processability issue.

**Claims**

1.  A polymer composition comprising 35 to 89.9 wt% of a multimodal linear low density polyethylene (LLDPE) having

an $MFR_{21}/MFR_2$, (measured according to ASTM D1238 at 190°C and under a load of 21.6 kg and 2.16 kg), of 50 to 200, 10 to 50 wt% of a low density polyethylene (LDPE) and 0.1 to 15.0 wt% of foaming agent component based on the total amount (100wt%) of the polymer composition.

2. A polymer composition as claimed in claim 1 wherein the foaming agent component comprises sodium borohydride, ammonium carbonate, sodium bicarbonate, and modified sodium bicarbonate, e.g. sodium bicarbonate modified with a proton donor such as citric acid.

3. A polymer composition as claimed in any preceding claim comprising 50 to 74.9 wt% of a multimodal linear low density polyethylene having an $MFR_{21}/MFR_2$ of 50 to 200, 25 to 49.9 wt% of a low density polyethylene and 0.1 to 15 wt% of foaming agent component.

4. A foamed article comprising a composition comprising 35 to 90 wt% of a multimodal linear low density polyethylene having an $MFR_{21}/MFR_2$ of 50 to 200 (measured according to ASTM D1238 at 190°C and under a load of 21.6 kg and 2.16 kg) and 10 to 50 wt% of an LDPE based on the total amount (100wt%) of the polymer composition.

5. A foamed layer element comprising 35 to 90 wt% of a multimodal linear low density polyethylene having an $MFR_{21}/MFR_2$ of 50 to 200 (measured according to ASTM D1238 at 190°C and under a load of 21.6 kg and 2.16 kg) and 10 to 50 wt% of an LDPE.

6. A foamed layer element as claimed in claim 5 which is a foamed monolayer film or sheet or a foamed layer of a multilayer film or sheet.

7. A foamed layer element as claimed in claim 5 to 6 wherein the final density of the foamed layer element is 600 to 800 kg/m$^3$.

8. A foamed layer element as claimed in claim 5 to 7 wherein the foamed layer element is foamed by 10 to 30 wt%.

9. A foamed layer element or polymer composition as claimed in claim 1 to 3 or 5 to 8 wherein the multimodal LLDPE has a density of 915 to 935 kg/m$^3$.

10. A foamed layer element or polymer composition as claimed in claim 1 to 3 or 5 to 9 wherein the multimodal LLDPE has an $MFR_2$ of 0.01 to 20 g/10min (measured according to ASTM D1238 at 190°C and under a load of 2.16 kg).

11. A foamed layer element or polymer composition as claimed in claim 1 to 3 or 5 to 10 wherein the multimodal LLDPE has an Mw/Mn of 10 or more such as 10 to 30.

12. A foamed layer element or polymer composition as claimed in claim 1 to 3 or 5 to 11 wherein the LDPE has a $MFR_2$ of 0.1-20 g/10 min (measured according to ASTM D1238 at 190°C and under a load of 2.16 kg).

13. A foamed layer element or polymer composition as claimed in claim 1 to 3 or 5 to 12 wherein the LDPE has a density of 915 to 935 kg/m$^3$.

14. A foamed layer element or polymer composition as claimed in claim 1 to 3 or 5 to 13 wherein the multimodal LLDPE has an $MFR_{21}$ of 10 to 200 g/10min (measured according to ASTM D1238 at 190°C and under a load of 21.6 kg).

15. A multilayer film or sheet comprising at least 3 layers, two outer layers and a core layer and wherein said core layer is foamed and comprises 35 to 90 wt% of a multimodal linear low density polyethylene having an $MFR_{21}/MFR_2$ of 50 to 200 (measured according to ASTM D1238 at 190°C and under a load of 21.6 kg and 2.16 kg) and 10 to 50 wt% of an LDPE.

16. A film or sheet as claimed in claim 6 or 15 having a thickness of 50 to 1000 $\mu$m.

**Patentansprüche**

1. Polymerzusammensetzung, die auf die Gesamtmenge (100 Gew.-%) der Polymerzusammensetzung bezogen 35 bis 89,9 Gew.-% eines multimodalen linearen Polyethylens niedriger Dichte (LLDPE) mit einem $MFR_{21}/MFR_2$ (ge-

messen nach ASTM D1238 bei 190 °C und unter einer Last von 21,6 kg und 2,16 kg) von 50 bis 200, 10 bis 50 Gew.-% eines Polyethylens niedriger Dichte (LDPE) und 0,1 bis 15,0 Gew.-% Schäummittelkomponente umfasst.

2. Polymerzusammensetzung nach Anspruch 1, wobei die Schäummittelkomponente Natriumborhydrid, Ammoniumcarbonat, Natriumbicarbonat und modifiziertes Natriumbicarbonat, z. B. mit einem Protonendonator wie etwa Zitronensäure modifiziertes Natriumbicarbonat, umfasst.

3. Polymerzusammensetzung nach einem vorstehenden Anspruch, die 50 bis 74,9 Gew.-% eines multimodalen linearen Polyethylens niedriger Dichte mit einem $MFR_{21}/MFR_2$ von 50 bis 200, 25 bis 49,9 Gew.-% eines Polyethylens niedriger Dichte, und 0,1 bis 15 Gew.-% Schäummittelkomponente umfasst.

4. Geschäumter Artikel, der eine Zusammensetzung umfasst, die auf die Gesamtmenge (100 Gew.-%) der Polymerzusammensetzung bezogen 35 bis 90 Gew.-% eines multimodalen linearen Polyethylens niedriger Dichte mit einem $MFR_{21}/MFR_2$ von 50 bis 200 (gemessen nach ASTM D1238 bei 190 °C und unter einer Last von 21,6 kg und 2,16 kg), und 10 bis 50 Gew.-% eines LDPE umfasst.

5. Geschäumtes Schichtelement, das 35 bis 90 Gew.-% eines multimodalen linearen Polyethylens niedriger Dichte mit einem $MFR_{21}/MFR_2$ von 50 bis 200 (gemessen nach ASTM D1238 bei 190 °C und unter einer Last von 21,6 kg und 2,16 kg), und 10 bis 50 Gew.-% eines LDPE umfasst.

6. Geschäumtes Schichtelement nach Anspruch 5, bei dem es sich um einen geschäumten Einschichtfilm oder eine Einschichtfolie oder eine geschäumte Schicht eines Mehrschichtfilms oder einer Mehrschichtfolie handelt.

7. Geschäumtes Schichtelement nach Anspruch 5 bis 6, wobei die Enddichte des geschäumten Schichtelements 600 bis 800 kg/m$^3$ beträgt.

8. Geschäumtes Schichtelement nach Anspruch 5 bis 7, wobei das geschäumte Schichtelement um 10 bis 30 Gew.-% geschäumt ist.

9. Geschäumtes Schichtelement oder Polymerzusammensetzung nach Anspruch 1 bis 3 oder 5 bis 8, wobei das multimodale LLDPE eine Dichte von 915 bis 935 kg/m$^3$ aufweist.

10. Geschäumtes Schichtelement oder Polymerzusammensetzung nach Anspruch 1 bis 3 oder 5 bis 9, wobei das multimodale LLDPE einen $MFR_2$ von 0,01 bis 20 g/10 Min. (gemessen nach ASTM D1238 bei 190 °C und unter einer Last von 2,16 kg) aufweist.

11. Geschäumtes Schichtelement oder Polymerzusammensetzung nach Anspruch 1 bis 3 oder 5 bis 10, wobei das multimodale LLDPE ein Mw/Mn von 10 oder mehr, wie etwa 10 bis 30, aufweist.

12. Geschäumtes Schichtelement oder Polymerzusammensetzung nach Anspruch 1 bis 3 oder 5 bis 11, wobei das LDPE einen $MFR_2$ von 0,1-20 g/10 Min. (gemessen nach ASTM D1238 bei 190 °C und unter einer Last von 2,16 kg) aufweist.

13. Geschäumtes Schichtelement oder Polymerzusammensetzung nach Anspruch 1 bis 3 oder 5 bis 12, wobei das LDPE eine Dichte von 915 bis 935 kg/m$^3$ aufweist.

14. Geschäumtes Schichtelement oder Polymerzusammensetzung nach Anspruch 1 bis 3 oder 5 bis 13, wobei das multimodale LLDPE einen $MFR_{21}$ von 10 bis 200 g/10 Min. (gemessen nach ASTM D1238 bei 190 °C und unter einer Last von 21,6 kg) aufweist.

15. Mehrschichtfilm oder -folie, der/die mindestens 3 Schichten umfasst, zwei Außenschichten und eine Kernschicht, und wobei die Kernschicht geschäumt ist und 35 bis 90 Gew.-% eines multimodalen linearen Polyethylens niedriger Dichte mit einem $MFR_{21}/MFR_2$ von 50 bis 200 (gemessen nach ASTM D1238 bei 190 °C und unter einer Last von 21,6 kg und 2,16 kg), und 10 bis 50 Gew.-% eines LDPE umfasst.

16. Film oder Folie nach Anspruch 6 oder 15, der/die eine Dicke von 50 bis 1.000 $\mu$m aufweist.

**Revendications**

1. Composition polymère comprenant de 35 à 89,9% en poids d'un polyéthylène basse densité linéaire (LLDPE) multimodal présentant un $MFR_{21}/MFR_2$ (mesuré selon ASTM D1238 à 190°C et sous une charge de 21,6 kg et 2,16 kg), de 50 à 200, de 10 à 50 % en poids d'un polyéthylène basse densité (LDPE) et de 0,1 à 15,0% en poids d'un constituant d'agent d'expansion sur la base de la quantité totale (100 % en poids) de la composition polymère.

2. Composition polymère selon la revendication 1 dans laquelle le constituant d'agent d'expansion comprend du borohydrure de sodium, du carbonate d'ammonium, du bicarbonate de sodium et du bicarbonate de sodium modifié, par exemple du bicarbonate de sodium modifié avec un donneur de protons tel que l'acide citrique.

3. Composition polymère selon l'une quelconque des revendications précédentes comprenant de 50 à 74,9 % en poids d'un polyéthylène basse densité linéaire multimodal présentant un $MFR_{21}/MFR_2$ de 50 à 200, de 25 à 49,9 % en poids d'un polyéthylène basse densité et de 0,1 à 15 % en poids d'un constituant d'agent d'expansion.

4. Article expansé comprenant une composition comprenant de 35 à 90 % en poids d'un polyéthylène basse densité linéaire multimodal présentant un $MFR_{21}/MFR_2$ de 50 à 200 (mesuré selon ASTM D1238 à 190°C et sous une charge de 21,6 kg et 2,16 kg) et de 10 à 50 % en poids d'un LDPE sur la base de la quantité totale (100 % en poids) de la composition polymère.

5. Élément en couche expansé comprenant de 35 à 90 % en poids d'un polyéthylène basse densité linéaire multimodal présentant un $MFR_{21}/MFR_2$ de 50 à 200 (mesuré selon ASTM D1238 à 190°C et sous une charge de 21,6 kg et 2,16 kg) et de 10 à 50 % en poids d'un LDPE.

6. Élément en couche expansé selon la revendication 5 qui est un film ou une feuille monocouche expansé(e) ou une couche expansée d'un film ou d'une feuille multicouche.

7. Élément en couche expansé selon les revendications 5 à 6 dans lequel la densité finale de l'élément en couche expansé est de 600 à 800 kg/m$^3$.

8. Élément en couche expansé selon les revendications 5 à 7 dans lequel l'élément en couche expansé est expansé de 10 à 30 % en poids.

9. Élément en couche expansé ou composition polymère selon les revendications 1 à 3 ou 5 à 8 dans lequel ou dans laquelle le LLDPE multimodal présente une densité de 915 à 935 kg/m$^3$.

10. Élément en couche expansé ou composition polymère selon les revendications 1 à 3 ou 5 à 9 dans lequel ou dans laquelle le LLDPE multimodal présente un $MFR_2$ de 0,01 à 20 g/10 min (mesuré selon ASTM D1238 à 190°C et sous une charge de 2,16 kg).

11. Élément en couche expansé ou composition polymère selon les revendications 1 à 3 ou 5 à 10 dans lequel ou dans laquelle le LLDPE multimodal présente un Mw/Mn de 10 ou plus, tel que de 10 à 30.

12. Élément en couche expansé ou composition polymère selon les revendications 1 à 3 ou 5 à 11 dans lequel ou dans laquelle le LDPE présente un $MFR_2$ de 0,1 à 20 g/10 min (mesuré selon ASTM D1238 à 190°C et sous une charge de 2,16 kg).

13. Élément en couche expansé ou composition polymère selon les revendications 1 à 3 ou 5 à 12 dans lequel ou dans laquelle le LDPE présente une densité de 915 à 935 kg/m$^3$.

14. Élément en couche expansé ou composition polymère selon les revendications 1 à 3 ou 5 à 13 dans lequel ou dans laquelle le LLDPE multimodal présente un $MFR_{21}$ de 10 à 200 g/10 min (mesuré selon ASTM D1238 à 190°C et sous une charge de 21,6 kg).

15. Film ou feuille multicouche comprenant au moins 3 couches, deux couches externes et une couche centrale et dans lequel ou dans laquelle ladite couche centrale est expansée et comprend de 35 à 90 % en poids d'un polyéthylène basse densité linéaire multimodal présentant un $MFR_{21}/MFR_2$ de 50 à 200 (mesuré selon ASTM D1238 à 190°C et sous une charge de 21,6 kg et 2,16 kg) et de 10 à 50 % en poids d'un LDPE.

**16.** Film ou feuille selon la revendication 6 ou 15 présentant une épaisseur de 50 à 1 000 μm.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014202605 A1
- WO 2005007729 A1
- US 4738810 A
- WO 9535323 A
- WO 0155230 A
- WO 2004000933 A
- EP 810235 A
- WO 9951646 A

**Non-patent literature cited in the description**

- **J. RANDALL.** *JMS - Rev. Macromol. Chem. Phys.,* 1989, vol. C29 (2, 3), 201-317
- **K. K. MCAULEY ; J. F. MCGREGOR.** On-line Inference of Polymer Properties in an Industrial Polyethylene Reactor. *AIChE Journal,* June 1991, vol. 37 (6), 825-835